# EUROPEAN PATENT APPLICATION

(11) **EP 3 056 980 A1**
(43) Date of publication of application: **17.08.2016**
(21) Application number: 14898046.9
(22) Date of filing: 24.07.2014
(51) Int. Cl.: G06F 3/0487

(54) **METHOD AND APPARATUS FOR SWITCHING SCREEN DISPLAY MODE OF TERMINAL DEVICE, AND TERMINAL DEVICE**

(71) Applicant: Huawei Technologies Co. Ltd., Shenzhen, Guangdong 518129 (CN)
(72) Inventor: YANG, Xiaoyun, Shenzhen Guangdong 518129 (CN)
(74) Representative: Pfenning, Meinig & Partner mbB
(86) International application number: PCT/CN2014/082961
(87) International publication number: WO 2016/011649

(57) **Abstract**

Embodiments of the present invention disclose a method and an apparatus for switching a display mode of a screen of a terminal device, and a terminal device, which can better improve accuracy of switching a display mode of a screen. In the method for switching a display mode of a screen of a terminal device provided in the embodiments of the present invention, an eye position of a user is identified by using a front-facing camera of the terminal device, an eye viewing orientation is determined according to the identified eye position; an angle between the eye viewing orientation and a current display reference orientation of a screen of the terminal device is determined, where the current display reference orientation of the screen of the terminal device refers to a display orientation of content of the screen in a current display mode of the screen; and it is determined, according to the angle, whether the display mode of the screen needs to be switched.

## Description

### TECHNICAL FIELD

The present invention relates to the field of communications technologies, and in particular, to a method and an apparatus for switching a display mode of a screen of a terminal device, and a terminal device.

### BACKGROUND

A screen of an electronic device such as a mobile phone and a PAD can be automatically switched to landscape or portrait according to a posture of the device. Using a mobile phone as an example, a method for switching a display mode of a screen of the mobile phone includes: acquiring a current rotational angle of the mobile phone by using a G-sensor (Gravity Sensor, gravity sensor), and then determining, by comparing the acquired rotational angle and a switching threshold, whether the screen is displayed in a landscape mode or a portrait mode, so as to ensure that a display orientation of the screen is consistent with a viewing orientation of a user. However, accuracy is relatively poor in this switching method. For example, when the user is side-lying, the display mode of the screen of the mobile phone is switched to a landscape display mode, which makes it inconvenient for the user to view and compromises user experience.

### SUMMARY

Embodiments of the present invention provide a method and an apparatus for switching a display mode of a screen of a terminal device, and a terminal device, which can better improve accuracy of switching a display mode of a screen.

To achieve the foregoing objective, the following technical solutions are adopted in the embodiments of the present invention use:

According to a first aspect, an embodiment of the present invention provides a method for switching a display mode of a screen of a terminal device, including:
identifying an eye position of a user by using a front-facing camera of the terminal device, determining an eye viewing orientation according to the identified eye position, and determining an angle between the eye viewing orientation and a current display reference orientation of a screen of the terminal device, where the current display reference orientation of the screen of the terminal device refers to a display orientation of content of the screen in a current display mode of the screen; and
determining, according to the angle, whether the display mode of the screen needs to be switched.

With reference to a possible implementation manner of the first aspect, in a first possible implementation manner, the identifying an eye position of a user by using a front-facing camera of the terminal device specifically includes: identifying positions of eyes of the user; and
the determining an eye viewing orientation according to the identified eye position specifically includes: determining a left-to-right connection line between the positions of the eyes as the eye viewing orientation according to the identified positions of the eyes.

With reference to a possible implementation manner of the first aspect, in a second possible implementation manner, before the identifying an eye position of a user by using a front-facing camera of the terminal device, the method further includes:
acquiring a rotational angle of the terminal device relative to a reference orientation by using a gravity sensor, where the rotational angle refers to an angle between the terminal device and the reference orientation, and the reference orientation refers to an upward orientation of a vertically-upward placed terminal device; and
identifying the eye position of the user by using the front-facing camera of the terminal device when it is determined that the rotational angle meets a switching angle for switching the display mode of the screen triggered by the gravity sensor.

With reference to the first aspect and the second possible implementation manner of the first aspect, in a third possible implementation manner, after the identifying an eye position of a user by using a front-facing camera of the terminal device, the method further includes:
entering a gravity sensor switching mode when the eye position fails to be identified, where in the gravity sensor switching mode, the display mode of the screen is switched according to the rotational angle that is of the terminal device and acquired by the gravity sensor.

With reference to the second or third possible implementation manner of the first aspect, in a fourth possible implementation manner, the determining, according to the angle, whether the display mode of the screen needs to be switched specifically includes:
determining whether the angle meets an angle value range for switching the display mode of the screen; and
entering the gravity sensor switching mode when it is determined that the angle meets the angle value range for switching the display mode of the screen, where in the gravity sensor switching mode, the display mode of the screen is switched according to the rotational angle that is of the terminal device and acquired by the gravity sensor.

With reference to the fourth possible implementation manner of the first aspect, in a fifth possible implementation manner, the determining, according to the angle, whether the display mode of the screen needs to be switched specifically includes:
maintaining the display mode of the screen when it is determined that the angle does not meet the angle value range for switching the display mode of the screen.

With reference to the first aspect and any one of the first to the fifth possible implementation manners of the first aspect, in a sixth possible implementation manner, the display mode includes a landscape display mode and a portrait display mode.

According a second aspect, an embodiment of the present invention further provides an apparatus for switching a display mode of a screen of a terminal device, including:
an eye viewing orientation determining unit, configured to identify an eye position of a user by using a front-facing camera of the terminal device, and determine an eye viewing orientation according to the identified eye position;
an angle determining unit, configured to determine an angle between the eye viewing orientation and a current display reference orientation of a screen of the terminal device, where the current display reference orientation of the screen of the terminal device refers to a display orientation of content of the screen in a current display mode of the screen; and
a determining unit, configured to determine, according to the angle, whether the display mode of the screen needs to be switched.

With reference to a possible implementation manner of the second aspect, in a first possible implementation manner, the eye viewing orientation determining unit is further configured to identify positions of eyes of the user by using the front-facing camera of the terminal device, and determine a left-to-right connection line between the positions of the eyes as the eye viewing orientation according to the identified positions of the eyes.

With reference to the second aspect and the first possible implementation manner of the second aspect, in a second possible implementation manner, the apparatus further includes:
a unit for acquiring a rotational angle of a terminal device, configured to acquire a rotational angle of the terminal device relative to a reference orientation by using a gravity sensor, where the rotational angle refers to an angle between the terminal device and the reference orientation, and the reference orientation refers to an upward orientation of a vertically-upward placed terminal device; and
a triggering unit, configured to trigger the eye viewing orientation determining unit when it is determined that the rotational angle meets a switching angle for switching the display mode of the screen triggered by the gravity sensor.

With reference to the second possible implementation manner of the second aspect, in a third possible implementation manner, the apparatus further includes:
a switching unit, configured to enter a gravity sensor switching mode when the eye position fails to be identified by the eye viewing orientation determining unit, where in the gravity sensor switching mode, the display mode of the screen is switched according to the rotational angle that is of the terminal device and acquired by the gravity sensor.

With reference to the second possible implementation manner of the second aspect and the third possible implementation manner of the second aspect, in a fourth possible implementation manner, the determining unit is further configured to determine whether the angle meets an angle value range for switching the display mode of the screen, and enter the gravity sensor switching mode when it is determined that the angle meets the angle value range for switching the display mode of the screen, where in the gravity sensor switching mode, the display mode of the screen is switched according to the rotational angle that is of the terminal device and acquired by the gravity sensor.

With reference to the fourth possible implementation manner of the second aspect, in a fifth possible implementation manner, the determining unit is further configured to maintain the display mode of the screen when it is determined that the angle does not meet the angle value range for switching the display mode of the screen.

According to a third aspect, an embodiment of the present invention further provides a terminal device, including a bus, and a processor, and a memory, where the process and the memory are connected to the bus; where the memory is configured to store a computer instruction, and the processor executes the computer instruction to:
identify an eye position of a user by using a front-facing camera of the terminal device, determine an eye viewing orientation according to the identified eye position, and determine an angle between the eye viewing orientation and a current display reference orientation of a screen of the terminal device, where the current display reference orientation of the screen of the terminal device refers to a display orientation of content of the screen in a current display mode of the screen; and
determine, according to the angle, whether the display mode of the screen needs to be switched.

With reference to a possible implementation manner of the third aspect, in a first possible implementation manner, the processor executes the computer instruction to:
identify positions of eyes of the user by using the front-facing camera of the terminal device, and determine a left-to-right connection line between the positions of the eyes as the eye viewing orientation according to the identified positions of the eyes.

With reference to the third aspect and the first possible implementation manner of the third aspect, in a second possible implementation manner, the processor executes the computer instruction to:
acquire a rotational angle of the terminal device relative to a reference orientation by using a gravity sensor before identifying the eye position of the user by using the front-facing camera of the terminal device, where the rotational angle refers to an angle between the terminal device and the reference orientation, and the reference orientation refers to an upward orientation of a vertically-upward placed terminal device; and
identify the eye position of the user by using the front-facing camera of the terminal device when it is determined that the rotational angle meets a switching angle for switching the display mode of the screen triggered by the gravity sensor.

With reference to the second possible implementation manner of the third aspect, in a third possible implementation manner, the processor executes the computer instruction to:
enter a gravity sensor switching mode when the eye position fails to be identified, where in the gravity sensor switching mode, the display mode of the screen is switched according to the rotational angle that is of the terminal device and acquired by the gravity sensor.

With reference to the second possible implementation manner of the third aspect and the third possible implementation manner of the third aspect, in a fourth possible implementation manner, the processor executes the computer instruction to:
determine whether the angle meets an angle value range for switching the display mode of the screen; and
enter the gravity sensor switching mode when it is determined that the angle meets the angle value range for switching the display mode of the screen, where in the gravity sensor switching mode, the display mode of the screen is switched according to the rotational angle that is of the terminal device and acquired by the gravity sensor.

With reference to the fourth possible implementation manner of the third aspect, in a fifth possible implementation manner, the computer instruction is specifically used to:
maintain the display mode of the screen when it is determined that the angle does not meet the angle value range for switching the display mode of the screen.

In the method and the apparatus for switching a display mode of a screen of a terminal device, and the terminal device according to the embodiments of the present invention, an eye position of a user is identified by using a front-facing camera of the terminal device; an eye viewing orientation is determined according to the identified eye position, and an angle between the eye viewing orientation and a current display reference orientation of a screen of the terminal device is determined; then, it is determined, according to the angle, whether a display mode of the screen needs to be switched. When it is determined that the display mode of the screen needs to be switched, a gravity sensor switching mode is entered; otherwise, the display mode of the screen is maintained. Compared with the prior art in which it is determined, according to a rotational angle that is of the terminal device and acquired by a gravity sensor, whether to switch the display mode of the screen, in the embodiments of the present invention, the angle between the eye viewing orientation and the current display reference orientation of the screen of the terminal device is further determined, and the gravity sensor switching mode is entered only when the angle meets an angle value range for switching the display mode of the screen, thereby reducing unnecessary switching of the display mode of the screen caused by a behavior such as side-lying, better improving accuracy of switching the display mode of the screen, and enhancing user experience.

### BRIEF DESCRIPTION OF DRAWINGS

To describe the technical solutions in the embodiments of the present invention or in the prior art more clearly, the following briefly introduces the accompanying drawings required for describing the embodiments or the prior art. Apparently, the accompanying drawings in the following description show merely some embodiments of the present invention, and a person of ordinary skill in the art may still derive other drawings from these accompanying drawings without creative efforts.
FIG. 1 is a schematic flowchart of a method for switching a display mode of a screen of a terminal device according to an embodiment of the present invention;
FIG. 2 is a schematic flowchart of a method for switching a display mode of a screen of a terminal device according to another embodiment of the present invention;
FIG. 3 is a schematic diagram of an angle between an eye viewing orientation and a current display reference orientation of a screen according to an embodiment of the present invention;
FIG. 4 is a schematic diagram of a rotational angle of a terminal device relative to a reference orientation according to an embodiment of the present invention;
FIG. 5 is a schematic structural diagram of an apparatus for switching a display mode of a screen according to an embodiment of the present invention;
FIG. 6 is a schematic structural diagram of an apparatus for switching a display mode of a screen according to another embodiment of the present invention; and
FIG. 7 is a schematic structural diagram of a terminal device according to an embodiment of the present invention.

### DESCRIPTION OF EMBODIMENTS

The following clearly and completely describes the technical solutions in the embodiments of the present invention with reference to the accompanying drawings in the embodiments of the present invention. Apparently, the described embodiments are merely some but not all of the embodiments of the present invention. All other embodiments obtained by a person of ordinary skill in the art based on the embodiments of the present invention without creative efforts shall fall within the protection scope of the present invention.

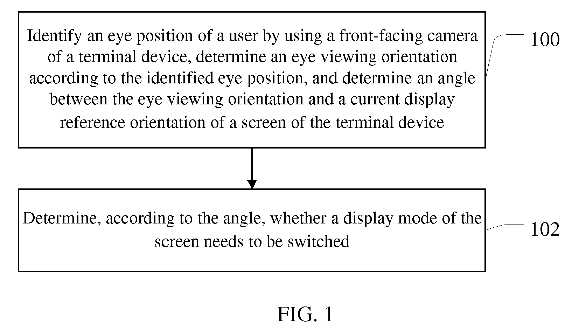

FIG. 1 is a schematic flowchart of a method for switching a display mode of a screen of a terminal device according to an embodiment of the present invention. As shown in FIG. 1, the method for switching a display mode of a screen in this embodiment includes:
100. Identify an eye position of a user by using a front-facing camera of the terminal device, determine an eye viewing orientation according to the identified eye position, and determine an angle between the eye viewing orientation and a current display reference orientation of a screen of the terminal device, where the current display reference orientation of the screen of the terminal device refers to a display orientation of content of the screen in a current display mode of the screen.

Identifying the eye position by using the front-facing camera is already realized in the prior art. For example, a specific identification method for identifying the eye position by using the front-facing camera of the terminal device may be that: after the front-facing camera captures an image of a human face, binarization processing and denoising processing are performed on the image of the human face by using an eye positioning algorithm, so as to identify the eye position.

The current display reference orientation of the screen refers to the display orientation of the content of the screen when the terminal device is in the current display mode of the screen. Using a smartphone as an example, when the screen is displayed, the content is displayed in a rectangular area within the screen. The display mode of the screen includes a portrait display mode and a landscape display mode. When the smartphone is placed vertically, the current display mode of the screen is the portrait display mode, the current display reference orientation of the screen is consistent with an orientation in which a long side of the smartphone is vertically upward, and the display orientation of the content, such as a character and a user interface (UI), displayed on the screen is also vertically upward. When the smartphone is placed transversely, the current display mode of the screen is the landscape display mode, the current display reference orientation of the screen is consistent with an orientation in which a short side of the smartphone is vertically upward, and the display orientation of the content, such as fonts and a UI, displayed on the screen is also vertically upward. When the smartphone is transversely inclined at 25° upwardly, the current display mode of the screen maintains the landscape display mode, the current display reference orientation of the screen is consistent with an orientation in which a short side of the smartphone is inclined at 25° upwardly, and the display orientation of the content, such as fonts and a UI, displayed on the screen, is also inclined at 25° upwardly. When the smartphone is transversely inclined at 50° upwardly, the current display mode of the screen is switched to the portrait display mode, the current display reference orientation of the screen is consistent with an orientation in which a long side of the smartphone is inclined at 40° upwardly, and the display orientation of the content, such as fonts and a UI, displayed on the screen is also inclined at 40° upwardly. Certainly, a display area of the screen of the terminal device may be also possibly non-rectangular, for example, a circle or an oval. In this case, the current display reference orientation of the screen of the terminal device also refers to the display orientation of the content of the screen when the terminal device is in the current display mode of the screen.

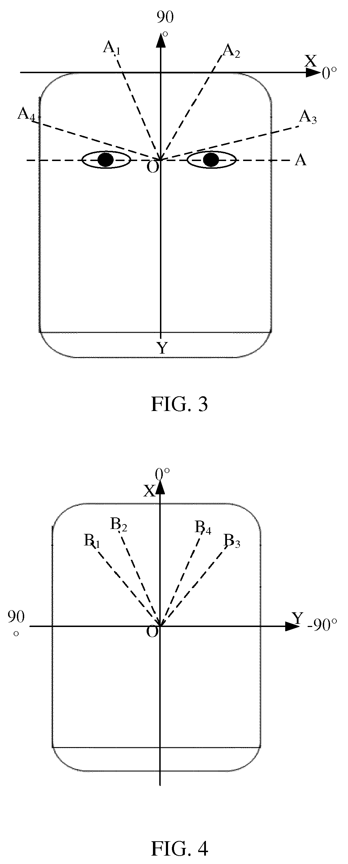

Preferably, the eye position identified by the front-facing camera is positions of eyes. A left-to-right connection line between the positions of the eyes is determined as the eye viewing orientation when the identified eye position includes the positions of the eyes. The determining the angle between the eye viewing orientation and the current display reference orientation of the screen according to the identified eye position may specifically include: determining the left-to-right connection line between the positions of the eyes as the eye viewing orientation according to the identified positions of the eyes, and determining the angle between the eye viewing orientation and the current display reference orientation of the screen. With reference to FIG. 3, in an X-Y coordinate system in the embodiment of the present invention, an X axis is parallel to a width orientation of the terminal device, and a Y axis is parallel to a length orientation of the terminal device. An eye viewing orientation OA is vertical to the current display reference orientation of the screen. Further, it can be determined that the angle between the eye viewing orientation and the current display reference orientation of the screen refers to an angle (where this angle is 90° in a state shown in FIG. 3.) between the eye viewing orientation and the Y axis. Therefore, an actual angle is acquired by calculating the angle between the OA and the Y axis.

102. Determine, according to the angle, whether the display mode of the screen needs to be switched.

It can be understood that an angle value range for switching the display mode of the screen needs to be preset. In step 102, after it is determined whether the angle between the eye viewing orientation and the current display reference orientation of the screen meets the angle value range for switching the display mode of the screen, it is determined whether the display mode of the screen needs to be switched. After the angle is determined in step 100, in step 102, it is determined, according to the angle, whether the display mode of the screen needs to be switched. For example, referring to FIG. 3, a display mode of a screen of a smartphone that includes a portrait display mode and a landscape display mode is used as an example, and it is assumed that the angle value range for switching the display mode of the screen is less than or equal to 45°, or greater than or equal to 135°. When the angle is less than or equal to 45°, or greater than or equal to 135°, it is determined that the display mode of the screen needs to be switched; otherwise, it is determined that the display mode of the screen does not need to be switched.

Specifically, the determining, according to the angle, whether the display mode of the screen needs to be switched specifically includes: determining whether the angle meets the angle value range for switching the display mode of the screen, and entering a gravity sensor switching mode when it is determined that the angle meets the angle value range for switching the display mode of the screen, where in the gravity sensor switching mode, the display mode of the screen is switched according to a rotational angle that is of the terminal device and acquired by a gravity sensor. In the prior art, the gravity sensor switching mode, that is, how to switch the screen of the terminal device to landscape display or portrait display according to the rotational angle that is of the terminal device and acquired by the gravity sensor, is already realized and details are not described herein again. In this embodiment, when the angle meets the angle value range for switching the display mode of the screen, it indicates that a specific angle already exists between the eye viewing orientation and the current display reference orientation of the screen. In this case, it is inconvenient for the user to view the content on the screen, and the display mode of the screen needs to be switched. Further, same as that in the prior art, switching the display mode of the screen is still according to the rotational angle that is of the terminal device and acquired by the gravity sensor. The rotational angle acquired in this embodiment is merely used to determine whether the display mode of the screen needs to be switched. The rotational angle that is of the terminal device and acquired by the gravity sensor may be already acquired before the angle is acquired, or may be acquired by triggering the gravity sensor after the angle has been acquired, which is not limited in this embodiment.

Further, the display mode of the screen is maintained when it is determined that the angle does not meet the angle value range for switching the display mode of the screen. That is, the gravity sensor switching mode does not need to be entered when the angle does not meet the angle value range for switching the display mode of the screen. In this case, the rotational angle of the terminal device may be already relatively large; however, a specific angle does not exist between the eye viewing orientation and the current display reference orientation of the screen. The user may be using the terminal device in a side-lying position, and in this case, the display mode of the screen needs to be maintained.

In this embodiment, the display mode of the screen includes a landscape display mode and a portrait display mode. It can be understood that, after the gravity sensor switching mode is entered according to the rotational angle of the terminal device, the display mode of the screen may be switched to the landscape display mode from the portrait display mode, or may be switched to an upward landscape display mode from a downward landscape display mode, or may be switched to an upward portrait display mode from a downward portrait display mode.

In the method for switching a display mode of a screen provided in the embodiment of the present invention, an eye position of a user is identified by using a front-facing camera of a terminal device; an eye viewing orientation is determined according to the identified eye position, and an angle between the eye viewing orientation and a current display reference orientation of a screen of the terminal device is determined; then, it is determined, according to the angle, whether a display mode of the screen needs to be switched. When it is determined that the display mode of the screen needs to be switched, a gravity sensor switching mode is entered; otherwise, the display mode of the screen is maintained. In this way, compared with the prior art in which it is determined, according to a rotational angle that is of the terminal device and acquired by a gravity sensor, whether to switch the display mode of the screen, in the embodiment of the present invention, the eye position is further identified to determine the eye viewing orientation, the angle between the eye viewing orientation and the current display reference orientation of the screen of the terminal device is determined, and the gravity sensor switching mode is entered only when the angle meets an angle value range for switching the display mode of the screen; thereby reducing unnecessary switching of the display mode of the screen caused by a behavior such as side-lying, better improving accuracy of switching the display mode of the screen, and enhancing user experience.

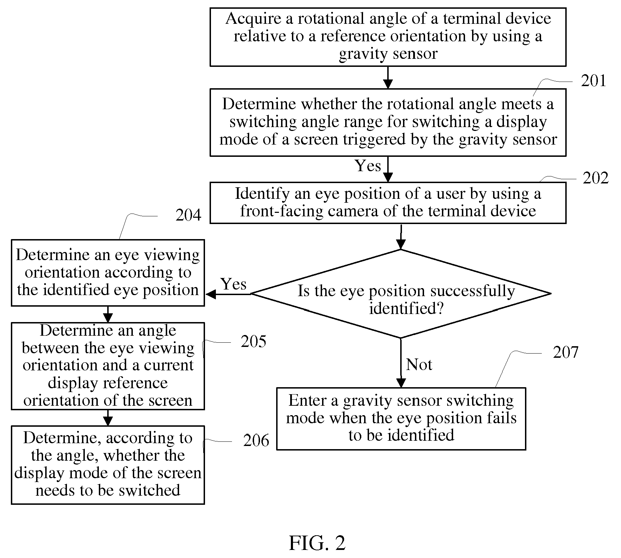

FIG. 2 is a schematic flowchart of a method for switching a display mode of a screen of a terminal device according to another embodiment of the present invention. As shown in FIG. 2, the method for switching a display mode of a screen in this embodiment includes:
200. Acquire a rotational angle of the terminal device relative to a reference orientation by using a gravity sensor.

It should be noted that the rotational angle herein refers to an angle between the terminal device and the reference orientation, and the reference orientation refers to an upward orientation (as referred to an orientation of an X axis shown in FIG. 4) of a vertically-upward placed terminal device, that is, the rotational angle refers to an angle between the terminal device and the X axis.

201. Determine whether the rotational angle meets a switching angle range for switching a display mode of a screen triggered by the gravity sensor. For example, when the switching angle range are two ranges, +45° to +90° and -45° to -90°, in a portrait display mode, if the rotational angle falls within the two angle ranges, a condition for switching from the portrait display mode to a landscape display mode is met, and the switching angles are respectively ±45°; otherwise, the portrait display mode is maintained. When the switching angle range are two ranges, +45° to 0° and -45° to 0°, in the landscape display mode, if the rotational angle falls within the two angle ranges, a condition for switching from the landscape display mode to the portrait display mode is met, and the switching angles are respectively ±45°; otherwise, the landscape display mode is maintained.

It should also be noted that enumerated values in the foregoing and in the following are all designed for ease of description and understanding of this embodiment clearly, which is not limited herein. A specific value should be set according to a design requirement.

Referring to FIG. 4, the determining whether the rotational angle meets a switching angle range for switching a display mode of a screen triggered by the gravity sensor specifically includes:

When an angle of the terminal device after rotation meets +45° to +90° (which is an OB₁ position shown in FIG. 4), or
when an angle of the terminal device after rotation meets -45° to -90° (which is an OB₃ position shown in FIG. 4), in the portrait display mode, a condition for switching from the portrait display mode to the landscape display mode is met.

When the angle of the terminal device after rotation meets -45° to 0° (which is an OB₄ position shown in FIG. 4), or
when the angle of the terminal device after rotation meets +45° to 0° (which is an OB₂ position shown in FIG. 4), in the landscape display mode, a condition for switching from the landscape display mode to the portrait display mode is met.

When it is determined that the rotational angle meets the switching angle range for switching the display mode of the screen triggered by the gravity sensor in step 201, an eye position of a user starts to be identified by using a front-facing camera of the terminal device, and specific steps include:
202. Identify an eye position of a user by using a front-facing camera of the terminal device.

The identifying the eye position by using the front-facing camera of the terminal device specifically includes: acquiring an image of a human face by using the front-facing camera of the terminal device.

203. When the eye position is successfully identified, perform step 204; when the eye position fails to be identified, perform step 207. After the image of the human face is acquired by using the front-facing camera of the terminal device in step 202, it is determined, in step 203 according to an eye positioning algorithm, whether information about the eye position in the image of the human face is successfully identified.

It should be noted that, because the image of the human face is acquired by using the front-facing camera, and the front-facing camera kept in an "on" state increases power consumption of the terminal device, the foregoing step 200 and step 201 are set in this embodiment, and therefore, it can be first determined whether a current rotational angle of the screen meets a switching angle for switching the display mode of the screen triggered by the gravity sensor. When the current rotational angle meets the switching angle, the eye position of the user starts to be identified by using the front-facing camera of the terminal device. When the current rotational angle does not meet the switching angle, identifying the eye position of the user by using the front-facing camera of the terminal device does not start. In this way, time that the camera is on can be reduced, and power consumption of the terminal device is decreased.

Additionally, after the front-facing camera is turned on, the eye may be directly identified by using the eye positioning algorithm. Because the eye positioning algorithm is a relatively mature solution, a person of ordinary skill in the art may clearly understand implementation of the eye positioning algorithm, and details are not further described herein.

204. Determine an eye viewing orientation according to the identified eye position.

205. Determine an angle between the eye viewing orientation and a current display reference orientation of the screen.

206. Determine, according to the angle, whether the display mode of the screen needs to be switched.

It can be understood that an angle value range for switching the display mode of the screen needs to be preset. In step 206, after it is determined whether the angle between the eye viewing orientation and the current display reference orientation of the screen meets the angle value range for switching the display mode of the screen, it is determined whether the display mode of the screen needs to be switched. After the angle is determined in step 205, in step 206, it is determined, according to the angle, whether the display mode of the screen needs to be switched. For example, referring to FIG. 3, a display mode of a screen of a smartphone that includes a landscape display mode and a portrait display mode is used as an example, and it is assumed that the angle value range for switching the display mode of the screen is less than or equal to 45°, or greater than or equal to 135°. When the angle is less than or equal to 45°, or greater than or equal to 135°, it is determined that the display mode of the screen needs to be switched; otherwise, it is determined that the display mode of the screen does not need to be switched. When the eye viewing orientation is in the OA₁ position and the OA₂ position shown in FIG. 3, the display mode of the screen is switched to the landscape display mode; when the eye viewing orientation is in the OA₃ position and the OA₄ position shown in FIG. 3, the display mode of the screen is maintained in the portrait display mode. It can be understood that, in FIG. 3, the mobile phone originally in the portrait display mode is used as an example for description. When the mobile phone is originally in the landscape display mode, assuming that the switching angle is 45°, when the angle is less than or equal to 45°, or greater than or equal to 135°, the display mode of the screen is switched to the portrait display mode, when the angle is greater than 45° and less than 135°, the display mode of the screen is maintained in the landscape display mode.

Specifically, the determining, according to the angle, whether the display mode of the screen needs to be switched specifically includes: determining whether the angle meets the angle value range for switching the display mode of the screen, and entering a gravity sensor switching mode when it is determined that the angle meets the angle value range for switching the display mode of the screen, where in the gravity sensor switching mode, the display mode of the screen is switched according to the rotational angle that is of the terminal device and acquired by the gravity sensor. In the prior art, the gravity sensor switching mode, that is, how to switch the screen of the terminal device to landscape display or portrait display according to the rotational angle that is of the terminal device and acquired by the gravity sensor, is already realized and details are not described herein again. In this embodiment, when the angle meets the angle value range for switching the display mode of the screen, it indicates that a specific angle already exists between the eye viewing orientation and the current display reference orientation of the screen. In this case, it is inconvenient for the user to view the content on the screen, and the display mode of the screen needs to be switched. Further, same as that in the prior art, switching the display mode of the screen is still according to the rotational angle that is of the terminal device and acquired by the gravity sensor. The rotational angle acquired in this embodiment is merely used to determine whether the display mode of the screen needs to be switched. The rotational angle that is of the terminal device and acquired by the gravity sensor may be already acquired before the angle is acquired, or may be acquired by triggering the gravity sensor after the angle has been acquired, which is not limited in this embodiment.

Further, the display mode of the screen is maintained when it is determined that the angle does not meet the angle value range for switching the display mode of the screen. That is, the gravity sensor switching mode does not need to be entered when the angle does not meet the angle value range for switching the display mode of the screen. In this case, the rotational angle of the terminal device may be already relatively large; however, a specific angle does not exist between the eye viewing orientation and the current display reference orientation of the screen. The user may be using the terminal device in a side-lying position, and in this case, the display mode of the screen needs to be maintained.

In this embodiment, the display mode of the screen includes a landscape display mode and a portrait display mode. It can be understood that, after the gravity sensor switching mode is entered according to the rotational angle of the terminal device, the display mode of the screen may be switched to the landscape display mode from the portrait display mode, or may be switched to an upward landscape display mode from a downward landscape display mode, or may be switched to an upward portrait display mode from a downward portrait display mode.

207. Enter a gravity sensor switching mode when the eye position fails to be identified, that is, the display mode of the screen is switched according to the rotational angle that is of the terminal device and acquired by the gravity sensor.

In the method for switching a display mode of a screen provided in the embodiment of the present invention, a rotational angle of a terminal device relative to a reference orientation is acquired by using a gravity sensor. After the rotational angle meets a switching angle range for switching a display mode of a screen triggered by the gravity sensor, an eye position of a user is further identified by using a front-facing camera of the terminal device. An eye viewing orientation is determined according to the identified eye position, and an angle between the eye viewing orientation and a current display reference orientation of the screen of the terminal device is determined; then, it is determined, according to the angle, whether a display mode of the screen needs to be switched. When it is determined that the display mode of the screen needs to be switched, a gravity sensor switching mode is entered; otherwise, the display mode of the screen is maintained. In this way, compared with the prior art in which it is determined, according to the rotational angle that is of the terminal device and acquired by the gravity sensor, whether to switch the display mode of the screen, in the embodiment of the present invention, the eye position is further identified to determine the eye viewing orientation, the angle between the eye viewing orientation and the current display reference orientation of the screen of the terminal device is determined, and the gravity sensor switching mode is entered only when the angle meets an angle value range for switching the display mode of the screen; thereby reducing unnecessary switching of the display mode of the screen caused by a behavior such as side-lying, better improving accuracy of switching the display mode of the screen, and enhancing user experience.

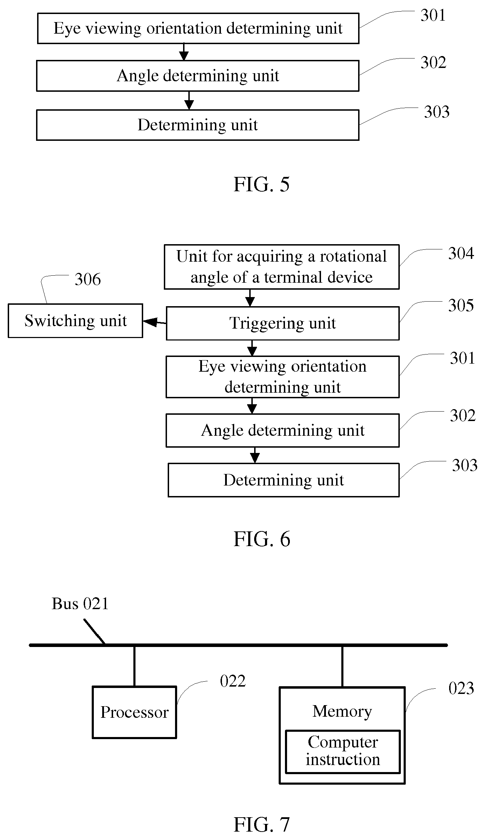

An embodiment of the present invention further provides an apparatus for switching a display mode of a screen of a terminal device. Referring to FIG. 5, the switching apparatus includes:
an eye viewing orientation determining unit 301, configured to identify an eye position of a user by using a front-facing camera of the terminal device, and determine an eye viewing orientation according to the identified eye position;
an angle determining unit 302, configured to determine an angle between the eye viewing orientation and a current display reference orientation of a screen of the terminal device, where the current display reference orientation of the screen of the terminal device refers to a display orientation of content of the screen in a current display mode of the screen, and
a determining unit 303, configured to determine, according to the angle, whether the display mode of the screen needs to be switched.

Identifying the eye position by using the front-facing camera is already realized in the prior art. For example, a specific identification method for identifying the eye position by using the front-facing camera of the terminal device may be that: after the front-facing camera captures an image of a human face, binarization processing and denoising processing are performed on the image of the human face by using an eye positioning algorithm, so as to identify the eye position.

The current display reference orientation of the screen refers to the display orientation of the content of the screen when the terminal device is in the current display mode of the screen. Using a smartphone as an example, when the screen is displayed, the content is displayed in a rectangular area within the screen. The display mode of the screen includes a portrait display mode and a landscape display mode. When the smartphone is placed vertically, the current display mode of the screen is the portrait display mode, the current display reference orientation of the screen is consistent with an orientation in which a long side of the smartphone is vertically upward, and the display orientation of the content, such as a character and a user interface (UI), displayed on the screen is also vertically upward. When the smartphone is placed transversely, the current display mode of the screen is the landscape display mode, the current display reference orientation of the screen is consistent with an orientation in which a short side of the smartphone is vertically upward, and the display orientation of the content, such as fonts and a UI, displayed on the screen is also vertically upward. Certainly, a display area of the screen of the terminal device may be also possibly non-rectangular, for example, a circle or an oval. In this case, the current display reference orientation of the screen of the terminal device also refers to the display orientation of the content of the screen when the terminal device is in the current display mode of the screen.

Preferably, the eye viewing orientation determining unit is further configured to determine a left-to-right connection line between the positions of the eyes as the eye viewing orientation when the eye position identified by the front-facing camera is positions of eyes and the identified eye position includes the positions of the eyes. The determining the angle between the eye viewing orientation and the current display reference orientation of the screen according to the identified eye position may specifically include: determining the left-to-right connection line between the positions of the eyes as the eye viewing orientation according to the identified positions of the eyes, and determining the angle between the eye viewing orientation and the current display reference orientation of the screen.

It can be understood that an angle value range for switching the display mode of the screen needs to be preset. The determining unit is further configured to determine whether the angle meets the angle value range for switching the display mode of the screen. The determining unit enters a gravity sensor switching mode when it is determined that the angle meets the angle value range for switching the display mode of the screen, where in the gravity sensor switching mode, the display mode of the screen is switched according to a rotational angle that is of the terminal device and acquired by a gravity sensor. In the prior art, the gravity sensor switching mode, that is, how to switch the screen of the terminal device to landscape display or portrait display according to the rotational angle that is of the terminal device and acquired by the gravity sensor, is already realized and details are not described herein again. In this embodiment, when the angle meets the angle value range for switching the display mode of the screen, it indicates that a specific angle already exists between the eye viewing orientation and the current display reference orientation of the screen. In this case, it is inconvenient for the user to view the content on the screen, and the display mode of the screen needs to be switched. Further, same as that in the prior art, switching the display mode of the screen is still according to the rotational angle that is of the terminal device and acquired by the gravity sensor. The rotational angle acquired in this embodiment is merely used to determine whether the display mode of the screen needs to be switched. The rotational angle that is of the terminal device and acquired by the gravity sensor may be already acquired before the angle is acquired, or may be acquired by triggering the gravity sensor after the angle has been acquired, which is not limited in this embodiment.

Further, the determining unit is further configured to maintain the display mode of the screen when it is determined that the angle does not meet the angle value range for switching the display mode of the screen. That is, the gravity sensor switching mode does not need to be entered when the angle does not meet the angle value range for switching the display mode of the screen. In this case, the rotational angle of the terminal device may be already relatively large; however, a specific angle does not exist between the eye viewing orientation and the current display reference orientation of the screen. The user may be using the terminal device in a side-lying position, and in this case, the display mode of the screen needs to be maintained.

In this embodiment, the display mode of the screen includes a landscape display mode and a portrait display mode. It can be understood that, after the gravity sensor switching mode is entered according to the rotational angle of the terminal device, the display mode of the screen may be switched to the landscape display mode from the portrait display mode, or may be switched to an upward landscape display mode from a downward landscape display mode, or may be switched to an upward portrait display mode from a downward portrait display mode.

In the apparatus for switching a display mode of a screen provided in the embodiment of the present invention, an eye position of a user is identified by using a front-facing camera of a terminal device; an eye viewing orientation is determined according to the identified eye position, and an angle between the eye viewing orientation and a current display reference orientation of a screen of the terminal device is determined; then, it is determined, according to the angle, whether a display mode of the screen needs to be switched. When it is determined that the display mode of the screen needs to be switched, a gravity sensor switching mode is entered; otherwise, the display mode of the screen is maintained. In this way, compared with the prior art in which it is determined, according to a rotational angle that is of the terminal device and acquired by a gravity sensor, whether to switch the display mode of the screen, in the embodiment of the present invention, the eye position is further identified to determine the eye viewing orientation, the angle between the eye viewing orientation and the current display reference orientation of the screen of the terminal device is determined, and the gravity sensor switching mode is entered only when the angle meets an angle value range for switching the display mode of the screen; thereby reducing unnecessary switching of the display mode of the screen caused by a behavior such as side-lying, better improving accuracy of switching the display mode of the screen, and enhancing user experience.

Referring to FIG. 6, the switching apparatus further includes: a unit 304 for acquiring a rotational angle of a terminal device, configured to acquire a rotational angle of the terminal device relative to a reference orientation by using the gravity sensor, where the rotational angle refers to an angle between the terminal device and the reference orientation, and the reference orientation refers to an upward orientation of a vertically-upward placed terminal device;
a triggering unit 305, configured to trigger the eye viewing orientation determining unit when it is determined that the rotational angle meets a switching angle for switching the display mode of the screen triggered by the gravity sensor; and
a switching unit 306, configured to enter the gravity sensor switching mode when the eye position fails to be identified by the eye viewing orientation determining unit, where in the gravity sensor switching mode, the display mode of the screen is switched according to the rotational angle that is of the terminal device and acquired by the gravity sensor.

It should be noted that the rotational angle refers to an angle between the terminal device and the reference orientation, and the reference orientation refers to an upward orientation (as referred to an orientation of an X axis shown in FIG. 4) of a vertically-upward placed terminal device, that is, the rotational angle refers to an angle between the terminal device and the X axis.

In the apparatus for switching a display mode of a screen provided in the embodiment of the present invention, a rotational angle of a terminal device relative to a reference orientation is acquired by using a gravity sensor. After the rotational angle meets a switching angle range for switching a display mode of a screen triggered by the gravity sensor, an eye position of a user is further identified by using a front-facing camera of the terminal device. An eye viewing orientation is determined according to the identified eye position, and an angle between the eye viewing orientation and a current display reference orientation of the screen of the terminal device is determined; then, it is determined, according to the angle, whether a display mode of the screen needs to be switched. When it is determined that the display mode of the screen needs to be switched, a gravity sensor switching mode is entered; otherwise, the display mode of the screen is maintained. In this way, compared with the prior art in which it is determined, according to the rotational angle that is of the terminal device and acquired by the gravity sensor, whether to switch the display mode of the screen, in the embodiment of the present invention, the eye position is further identified to determine the eye viewing orientation, the angle between the eye viewing orientation and the current display reference orientation of the screen of the terminal device is determined, and the gravity sensor switching mode is entered only when the angle meets an angle value range for switching the display mode of the screen; thereby reducing unnecessary switching of the display mode of the screen caused by a behavior such as side-lying, better improving accuracy of switching the display mode of the screen, and enhancing user experience.

An embodiment of the present invention further provides a terminal device corresponding to the method for switching a display mode of a screen provided in the foregoing embodiments. Referring to FIG. 7, the terminal device includes:
a bus 021, a processor 022, and a memory 023, where the processor 022 and the memory 023 are connected to the bus 021.

The memory 023 is configured to store a computer instruction. The processor 022 executes the computer instruction and is configured to: identify an eye position of a user by using a front-facing camera of the terminal device, determine an eye viewing orientation according to the identified eye position, and determine an angle between the eye viewing orientation and a current display reference orientation of a screen of the terminal device, where the current display reference orientation of the screen of the terminal device refers to a display orientation of content of the screen in a current display mode of the screen, and determine, according to the angle, whether the display mode of the screen needs to be switched.

The current display reference orientation of the screen refers to the display orientation of the content of the screen when the terminal device is in the current display mode of the screen.

It can be understood that an angle value range for switching the display mode of the screen needs to be preset. The processor 022 executes the computer instruction and is further configured to determine whether the angle meets the angle value range for switching the display mode of the screen, and enter a gravity sensor switching mode when it is determined that the angle meets the angle value range for switching the display mode of the screen, where in the gravity sensor switching mode, the display mode of the screen is switched according to a rotational angle that is of the terminal device and acquired by a gravity sensor.

The processor 022 executes the computer instruction and is specifically configured to: identify positions of eyes of the user by using the front-facing camera of the terminal device, and determine a left-to-right connection line between the positions of the eyes as the eye viewing orientation according to the identified positions of the eyes.

The processor 022 executes the computer instruction and is specifically configured to: acquire a rotational angle of the terminal device relative to a reference orientation by using the gravity sensor before identifying the eye position of the user by using the front-facing camera of the terminal device, where the rotational angle refers to an angle between the terminal device and the reference orientation, and the reference orientation refers to an upward orientation of a vertically-upward placed terminal device, and identify the eye position of the user by using the front-facing camera of the terminal device when it is determined that the rotational angle meets a switching angle for switching the display mode of the screen triggered by the gravity sensor.

It should be noted that the rotational angle refers to an angle between the terminal device and the reference orientation, and the reference orientation refers to an upward orientation (as referred to an orientation of an X axis shown in FIG. 4) of a vertically-upward placed terminal device, that is, the rotational angle refers to an angle between the terminal device and the X axis.

The processor 022 executes the computer instruction and is specifically configured to: enter the gravity sensor switching mode when the eye position fails to be identified, where in the gravity sensor switching mode, the display mode of the screen is switched according to the rotational angle that is of the terminal device and acquired by the gravity sensor.

The processor 022 executes the computer instruction and is specifically configured to: determine whether the angle meets the angle value range for switching the display mode of the screen, and enter the gravity sensor switching mode when it is determined that the angle meets the angle value range for switching the display mode of the screen, where in the gravity sensor switching mode, the display mode of the screen is switched according to the rotational angle that is of the terminal device and acquired by the gravity sensor.

The processor 022 executes the computer instruction and is specifically configured to: maintain the display mode of the screen when it is determined that the angle does not meet the angle value range for switching the display mode of the screen.

In the terminal device provided in the embodiment of the present invention, a rotational angle of the terminal device relative to a reference orientation is acquired by using a gravity sensor. After the rotational angle meets a switching angle range for switching a display mode of a screen triggered by the gravity sensor, an eye position of a user is further identified by using a front-facing camera of the terminal device. An eye viewing orientation is determined according to the identified eye position, and an angle between the eye viewing orientation and a current display reference orientation of the screen of the terminal device is determined; then, it is determined, according to the angle, whether a display mode of the screen needs to be switched. When it is determined that the display mode of the screen needs to be switched, a gravity sensor switching mode is entered; otherwise, the display mode of the screen is maintained. In this way, compared with the prior art in which it is determined, according to the rotational angle that is of the terminal device and acquired by the gravity sensor, whether to switch the display mode of the screen, in the embodiment of the present invention, the eye position is further identified to determine the eye viewing orientation, the angle between the eye viewing orientation and the current display reference orientation of the screen of the terminal device is determined, and the gravity sensor switching mode is entered only when the angle meets an angle value range for switching the display mode of the screen; thereby reducing unnecessary switching of the display mode of the screen caused by a behavior such as side-lying, better improving accuracy of switching the display mode of the screen, and enhancing user experience.

In the several embodiments provided in the present application, it should be understood that the disclosed terminal device, apparatus, and method may be implemented in other manners. For example, the described apparatus embodiment is merely exemplary. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

Based on the foregoing descriptions of the implementation manners, a person skilled in the art may clearly understand that the present invention may be implemented by software in addition to necessary universal hardware or by hardware only. In most circumstances, the former is a preferred implementation manner. Based on such an understanding, the technical solutions of the present invention essentially or the part contributing to the prior art may be implemented in a form of a software product. The computer software product is stored in a readable storage medium, such as a floppy disk, a hard disk or an optical disc of a computer, and includes several instructions for instructing a computer device (which may be a personal computer, a server, or a network device) to perform the methods described in the embodiments of the present invention. The foregoing storage medium includes: any medium that can store program code, such as a USB flash drive, a removable hard disk, a read-only memory (Read-Only Memory, ROM for short), a random access memory (Random Access Memory, RAM for short), a magnetic disk, or an optical disc.

The foregoing descriptions are merely specific implementation manners of the present invention, but are not intended to limit the protection scope of the present invention. Any variation or replacement readily figured out by a person skilled in the art within the technical scope disclosed in the present invention shall fall within the protection scope of the present invention. Therefore, the protection scope of the present invention shall be subject to the protection scope of the claims.

## Claims

1. A method for switching a display mode of a screen of a terminal device, comprising:
identifying an eye position of a user by using a front-facing camera of the terminal device, determining an eye viewing orientation according to the identified eye position, and determining an angle between the eye viewing orientation and a current display reference orientation of a screen of the terminal device, wherein the current display reference orientation of the screen of the terminal device refers to a display orientation of content of the screen in a current display mode of the screen; and
determining, according to the angle, whether the display mode of the screen needs to be switched.

2. The method for switching a display mode of a screen of a terminal device according to claim 1, wherein
the identifying an eye position of a user by using a front-facing camera of the terminal device specifically comprises: identifying positions of eyes of the user; and
the determining an eye viewing orientation according to the identified eye position specifically comprises: determining a left-to-right connection line between the positions of the eyes as the eye viewing orientation according to the identified positions of the eyes.

3. The method for switching a display mode of a screen of a terminal device according to claim 1 or 2, wherein
before the identifying an eye position of a user by using a front-facing camera of the terminal device, the method further comprises:
acquiring a rotational angle of the terminal device relative to a reference orientation by using a gravity sensor, wherein the rotational angle refers to an angle between the terminal device and the reference orientation, and the reference orientation refers to an upward orientation of a vertically-upward placed terminal device; and
identifying the eye position of the user by using the front-facing camera of the terminal device when it is determined that the rotational angle meets a switching angle for switching the display mode of the screen triggered by the gravity sensor.

4. The method for switching a display mode of a screen of a terminal device according to claim 3, wherein after the identifying an eye position of a user by using a front-facing camera of the terminal device, the method further comprises:
entering a gravity sensor switching mode when the eye position fails to be identified, wherein in the gravity sensor switching mode, the display mode of the screen is switched according to the rotational angle that is of the terminal device and acquired by the gravity sensor.

5. The method for switching a display mode of a screen of a terminal device according to claim 3 or 4, wherein the determining, according to the angle, whether the display mode of the screen needs to be switched specifically comprises:
determining whether the angle meets an angle value range for switching the display mode of the screen; and
entering the gravity sensor switching mode when it is determined that the angle meets the angle value range for switching the display mode of the screen, wherein in the gravity sensor switching mode, the display mode of the screen is switched according to the rotational angle that is of the terminal device and acquired by the gravity sensor.

6. The method for switching a display mode of a screen of a terminal device according to claim 5, wherein the determining, according to the angle, whether the display mode of the screen needs to be switched specifically comprises:
maintaining the display mode of the screen when it is determined that the angle does not meet the angle value range for switching the display mode of the screen.

7. The method for switching a display mode of a screen of a terminal device according to any one of claims 1 to 6, wherein the display mode composes a landscape display mode and a portrait display mode.

8. An apparatus for switching a display mode of a screen of a terminal device, comprising:
an eye viewing orientation determining unit, configured to identify an eye position of a user by using a front-facing camera of the terminal device, and determine an eye viewing orientation according to the identified eye position;
an angle determining unit, configured to determine an angle between the eye viewing orientation and a current display reference orientation of a screen of the terminal device, wherein the current display reference orientation of the screen of the terminal device refers to a display orientation of content of the screen in a current display mode of the screen; and
a determining unit, configured to determine, according to the angle, whether the display mode of the screen needs to be switched.

9. The switching apparatus according to claim 8, wherein
the eye viewing orientation determining unit is further configured to identify positions of eyes of the user by using the front-facing camera of the terminal device, and determine a left-to-right connection line between the positions of the eyes as the eye viewing orientation according to the identified positions of the eyes.

10. The switching apparatus according to claim 8 or 9, further comprising:
a unit for acquiring a rotational angle of a terminal device, configured to acquire a rotational angle of the terminal device relative to a reference orientation by using a gravity sensor, wherein the rotational angle refers to an angle between the terminal device and the reference orientation, and the reference orientation refers to an upward orientation of a vertically-upward placed terminal device; and
a triggering unit, configured to trigger the eye viewing orientation determining unit when it is determined that the rotational angle meets a switching angle for switching the display mode of the screen triggered by the gravity sensor.

11. The switching apparatus according to claim 10, further comprising:
a switching unit, configured to enter a gravity sensor switching mode when the eye position fails to be identified by the eye viewing orientation determining unit, wherein in the gravity sensor switching mode, the display mode of the screen is switched according to the rotational angle that is of the terminal device and acquired by the gravity sensor.

12. The switching apparatus according to claim 10 or 11, wherein
the determining unit is further configured to determine whether the angle meets an angle value range for switching the display mode of the screen, and enter the gravity sensor switching mode when it is determined that the angle meets the angle value range for switching the display mode of the screen, wherein in the gravity sensor switching mode, the display mode of the screen is switched according to the rotational angle that is of the terminal device and acquired by the gravity sensor.

13. The switching apparatus according to claim 12, wherein
the determining unit is further configured to maintain the display mode of the screen when it is determined that the angle does not meet the angle value range for switching the display mode of the screen.

14. A terminal device, wherein the terminal device comprises: a bus, a processor, and a memory, wherein the process and the memory are connected to the bus, the memory is configured to store a computer instruction, and the processor executes the computer instruction to:
identify an eye position of a user by using a front-facing camera of the terminal device, determine an eye viewing orientation according to the identified eye position, and determine an angle between the eye viewing orientation and a current display reference orientation of a screen of the terminal device, wherein the current display reference orientation of the screen of the terminal device refers to a display orientation of content of the screen in a current display mode of the screen; and
determine, according to the angle, whether the display mode of the screen needs to be switched.

15. The terminal device according to claim 14, wherein the processor executes the computer instruction to:
identify positions of eyes of the user by using the front-facing camera of the terminal device, and determine a left-to-right connection line between the positions of the eyes as the eye viewing orientation according to the identified positions of the eyes.

16. The terminal device according to claim 14 or 15, wherein the processor executes the computer instruction to:
acquire a rotational angle of the terminal device relative to a reference orientation by using a gravity sensor before identifying the eye position of the user by using the front-facing camera of the terminal device, wherein the rotational angle refers to an angle between the terminal device and the reference orientation, and the reference orientation refers to an upward orientation of a vertically-upward placed terminal device; and
identify the eye position of the user by using the front-facing camera of the terminal device when it is determined that the rotational angle meets a switching angle for switching the display mode of the screen triggered by the gravity sensor.

17. The terminal device according to claim 16, wherein the processor executes the computer instruction to:
enter a gravity sensor switching mode when the eye position fails to be identified, wherein in the gravity sensor switching mode, the display mode of the screen is switched according to the rotational angle that is of the terminal device and acquired by the gravity sensor.

18. The terminal device according to claim 16 or 17, wherein the processor executes the computer instruction to:
determine whether the angle meets an angle value range for switching the display mode of the screen; and
enter the gravity sensor switching mode when it is determined that the angle meets the angle value range for switching the display mode of the screen, wherein in the gravity sensor switching mode, the display mode of the screen is switched according to the rotational angle that is of the terminal device and acquired by the gravity sensor.

19. The terminal device according to claim 18, wherein the processor executes the computer instruction to:
maintain the display mode of the screen when it is determined that the angle does not meet the angle value range for switching the display mode of the screen.
